# EUROPÄISCHE PATENTSCHRIFT

(11) **EP 2 099 404 B1**
(45) Veröffentlichungstag und Bekanntmachung des Hinweises auf die Patenterteilung: **21.03.2012**
(21) Anmeldenummer: 08849159.2
(22) Anmeldetag: 13.11.2008
(51) Int. Cl.: A61H 1/00, A63B 22/16, A01K 15/02

(54) **VORRICHTUNG FÜR EIN TRAINING UND/ODER EINE ANALYSE DES BEWEGUNGSAPPARATES EINES BENUTZERS**
LADEVICE FOR TRAINING AND/OR ANALYZING A USER'S MUSCULOSKELETAL SYSTEM
DISPOSITIF POUR EXERCER ET/OU ANALYSER L'APPAREIL LOCOMOTEUR D'UN UTILISATEUR

(30) Priorität: 16.11.2007 DE 102007055060; 16.11.2007 DE 202007016167 U
(43) Veröffentlichungstag der Anmeldung: 16.09.2009
(73) Patentinhaber: MLS Lanny GmbH, 75323 Bad Wildbad (DE)
(72) Erfinder: LANNY, Michael, 75323 Bad Wildbad (DE)
(74) Vertreter: Leitner, Waldemar
(86) Internationale Anmeldenummer: PCT/EP2008/009562
(87) Internationale Veröffentlichungsnummer: WO 2009/062700

(56) Entgegenhaltungen:
- WO-A-2006/091082
- WO-A-2007/024103
- DE-A1- 19 634 396
- FR-A- 1 138 539

## Beschreibung

Die Erfindung betrifft eine Vorrichtung für ein Training und/oder eine Analyse des Bewegungsapparates eines Benutzers, wobei die Vorrichtung eine auf einer Grundplatte gelagerte Trittplatte aufweist, die durch eine Antriebseinrichtung in periodische und/oder aperiodische Bewegung versetzbar, dass die Antriebseinrichtung mindestens eine Antriebswelle aufweist, auf der mindestens ein Exzenter angeordnet ist, und dass an der Unterseite der Tretplatte mindestens eine Rolle angeordnet ist, die auf einer Außenfläche des mindestens einen Exzenters abrollbar ist.

Derartige Vorrichtungen sind vielfach bekannt und werden zum Training des Bewegungsapparates eines Benutzers oder zur Analyse desselben, um abnormale Bewegungsabläufe feststellen zu können, eingesetzt. Die WO 2007/024103 beschreibt eine Vorrichtung, welche zwei Trittplatten aufweist, die durch eine Antriebseinrichtung in eine periodische Bewegungen versetzbar sind. Hierzu dient eine von einer Antriebseinrichtung angetriebene Welle, die zwei Exzenter aufweist, die jeweils mit einer an den Trittplatten befestigten, orthogonal zu den Exzenterrollen angeordnete Rolle zusammenwirkt. Nachteilig an der bekannten Vorrichtung ist, dass die Amplitude der periodischen Bewegungen nicht veränderbar ist.

Ein weiterer Nachteil der bekannten Vorrichtung besteht darin, dass die vorstehend beaufschlagte Trittplatte nicht nur eine Hubbewegung, sondern auch eine Kippbewegung durchführt. Dies besitzt den Nachteil, dass hierdurch die Gelenke des Benutzers belastet werden. Insbesondere ist bei Pferden oder anderen Huftieren eine derartige Konstruktion nicht einsetzbar, da hierdurch die Gelenke der Pferde stark belastet werden, da sie die von der Trittplatte bewirkte Kippbewegung nicht ausgleichen können.

Die EP 0 929 284 beschreibt eine Vorrichtung, bei der über eine Grundplatte der Vorrichtung eine periodische, sinusförmige Bewegung seitenalternierend auf die Fußsohlen eines Benutzers aufgebracht wird. Hierzu weist die Vorrichtung eine Wippe auf, die auf einer Grundplatte mittels einer Schwenkachse gelagert ist. An der Unterseite der Wippe greifen Hubeinrichtungen an, die über einen gemeinsamen, drehzahlgeregelten Elektromotor mittels je eines Zahnriemenantriebs antreibbar sind. Die Hubeinrichtungen weisen je eine ortsfest auf der Bodenplatte gelagerte, eine Zahnscheibe des Zahnriemenantriebs tragende Antriebswelle auf. Es sind Pleuelstangen vorgesehen, die mit einem Ende exzentrisch an der Antriebswelle gelagert sind und mit dem anderen Ende an der Unterseite der Wippe angreifen. Mit einem derartigen Antriebsmechanismus ist es möglich, die Wippe um ihre Schwenkachse in eine oszillierende Hub- und Senkbewegung zu versetzen, wobei die Hubfrequenz über ein Steuergerät wahlweise in einem vorgebbaren Bereich eingestellt werden kann.

Eine derartige Vorrichtung ist zum Training des Bewegungsapparates eines Benutzers oder einer Analyse desselben durchaus zweckmäßig, wenn der Benutzer nur ein geringes Gewicht aufweist, wie dies z. B. bei einem auf der Wippe stehenden Menschen der Fall ist. Soll aber mit der Vorrichtung ein schwererer Benutzer, wie z. B. ein Sportpferd oder ein Rennkamel, trainiert und/oder dessen Bewegungsapparat analysiert werden, so ist die vorstehend beschriebene mechanische Ausgestaltung der Antriebseinrichtung in der Regel nicht ausreichend, um die erforderliche Betriebssicherheit zu erreichen, oder die Bauteile dieser Antriebseinrichtung müssen derart massiv ausgebildet werden, dass dann eine derartige, z. B. für Pferde adaptierte Vorrichtung äußerst voluminös baut.

Während es bei Menschen durchaus möglich ist, dass die beschriebene Vorrichtung von Anfang an mit der gewünschten Oszillationsfrequenz arbeitet, ist dies bei Pferden und anderen Tieren, insbesondere bei Fluchttieren, aber nicht möglich, da Pferde, wenn sie auf eine derartige Vorrichtung, die mit einer nicht vernachlässigbaren Frequenz arbeitet, gestellt werden, aufgrund des ihnen dann ungewohnten Untergrunds zu Fluchtreaktionen neigen.

Es ist Aufgabe der vorliegenden Erfindung, eine Vorrichtung der eingangs genannten Art derart weiterzubilden, dass in einfacher Art und Weise den bei der Benutzung der Vorrichtung durch schwerere Benutzer auftretenden Belastungen Rechnung getragen werden kann, wobei eine Veränderung der Amplitude der Trittplatte möglich sein soll.

Diese Aufgabe wird erfindungsgemäß dadurch gelöst, dass die Tretplatte der Vorrichtung über ortsfest an der Grundplatte angeordnete Vertikalführungen mit dieser verbunden ist, so dass die derart gelagerte Tretplatte einer durch die Antriebseinrichtung bewirkten Hubbewegung folgen kann, dass mindestens ein Exzenter einen ersten exzentrischen Bereich aufweist, der kegelstumpfförmig ausgebildet ist, so dass der von der auf der Oberfläche dieses Bereichs ablaufenden Rolle zurückgelegte Weg entlang der axialen Erstreckung des Exzenters zunimmt, und dass die Vorrichtung eine Hubverstelleinrichtung aufweist, durch welche der Hub der Tretplatte durch eine Positionsveränderung zwischen mindestens einer Rolle und dem mit ihr zusammenwirkenden Exzenter veränderbar ist.

Durch die erfindungsgemäßen Maßnahmen wird in vorteilhafter Art und Weise eine Vorrichtung geschaffen, die sich aufgrund ihrer mechanischen Ausbildung besonders zum Training und/oder zur Analyse des Bewegungsapparates eines schweren Benutzers eignet. Die mindestens eine mit mindestens einem Exzenter versehene Antriebswelle sowie die mit dem Exzenter zusammenwirkende Rolle stellen eine Konstruktion dar, die hinreichend stabil ist, um auch einer größeren Belastung standzuhalten. Die erfindungsgemäße Vorrichtung weist eine Hubverstelleinrichtung auf, mittels derer der von den Exzentern bewirkte Hub der Trittplatte in seiner Amplitude veränderbar ist. Indem nun erfindungsgemäß vorgesehen ist, dass mindestens ein Exzenter einen ersten exzentrischen Bereich aufweist, der kegelstumpfförmig ausgebildet ist, so dass der von der auf der auf der Oberfläche dieses Bereichs ablaufenden Rolle zurückgelegte Weg entlang der axialen Erstreckung des Exzenters zunimmt, wird in Verbindung mit der Verschiebbarkeit des Exzenters relativ zu den Rollen eine einfache Hubverstellung erreicht.

Eine vorteilhafte Weiterbildung der Erfindung sieht vor, dass der Exzenter einen nicht-exzentrischen Bereich aufweist. Eine derartige Maßnahme besitzt den Vorteil, dass mit der erfindungsgemäßen Vorrichtung zu Beginn des Trainings und/oder der Analyse des Bewegungsapparates des Benutzers, während es sich der Antriebseinrichtung bereits in Betrieb befindet, ein Betriebsmodus möglich ist, bei dem keine Hubbewegung der Tretplatte stattfindet. Eine derartige Maßnahme ist insbesondere als Startphase des Trainings und/oder der Behandlung zur Gewöhnung des Benutzers an die erfindungsgemäße Vorrichtung von Vorteil.

Eine weitere vorteilhafte Weiterbildung der Erfindung sieht vor, dass sich an den ansteigenden Bereich des Exzenters ein exzentrischer Endbereich anschließt. Eine derartige Maßnahme besitzt den Vorteil, dass in diesem Endbereich, in dem der maximale Hub der Vorrichtung erzeugbar ist, die Rollen besonders stabil auf der Außenfläche des Exzenters ablaufen und somit auch bei der Maximalamplitude ein ruhiger Betrieb der Vorrichtung gegeben ist. Dies ist insbesondere bei Fluchttieren von Vorteil.

Eine weitere vorteilhafte Weiterbildung der Erfindung sieht vor, dass die Vorrichtung zwei Antriebswellen mit jeweils mindestens zwei Exzentern aufweist, und dass an der Unterseite der Tretplatte mindestens vier jeweils mit einem Exzenter zusammenwirkende Rollen angeordnet sind. Eine derartige Ausgestaltung besitzt den Vorteil, dass hierdurch die Tretplatte zumindest in allen vier Eckbereichen mit der von der Antriebseinrichtung hervorgerufenen Hubbewegung beaufschlagbar ist, so dass eine gleichmäßige Auf- und Abbewegung der Tretplatte ermöglicht wird. Eine derartige Ausgestaltung besitzt des weiteren den Vorteil, dass hierdurch keine unerwünschten Kippbewegungen der Tretplatte auftreten können, was insbesondere bei Pferden, denen es nur schwer möglich ist, plötzlich auftretende Kippbewegungen ihres Untergrunds zu kompensieren, von Vorteil ist.

Eine weitere vorteilhafte Weiterbildung der Erfindung sieht vor, dass die Vorrichtung drei Antriebswellen mit jeweils mindestens zwei Exzentern aufweist und an der Unterseite der Tretplatte mindestens sechs Rollen vorgesehen sind. Eine derartige Ausgestaltung besitzt den Vorteil einer besonders stabilen Bauweise.

Eine weitere vorteilhafte Weiterbildung der Erfindung sieht vor, dass die Hubverstelleinrichtung eine Linearverstelleinheit aufweist, und dass mindestens ein Exzenter durch die Linearverstelleinheit relativ zu der mit ihm zusammenwirkenden Rolle positionsveränderlich ist. Eine derartige Maßnahme besitzt den Vorteil, dass hierdurch besonders einfach der Hub der Tretplatte veränderbar ist.

Eine weitere vorteilhafte Weiterbildung der Erfindung sieht vor, dass die Antriebswellen der Antriebseinrichtung auf einer zwischen der Grundplatte und der Tretplatte befindlichen Zwischenplatte angeordnet sind, und dass die Zwischenplatte durch eine Linearverschiebung in ihrer Position zur Tretplatte und somit die Exzenter zu den an der Unterseite der Tretplatte angeordneten Rollen veränderlich ist. Eine derartige Ausgestaltung besitzt den Vorteil, dass hierdurch in einfacher Art und Weise nicht nur eine Hubverstellung ausgebildet ist, die auch bei schwereren Benutzern einsetzbar ist. Vielmehr bewirkt die beschriebene Ausgestaltung, dass die Hubamplitude der Vorrichtung - während ihres Betriebs - leicht von einer Anfangsgröße, bei der die Amplitude relativ klein ist, durch ein Verschieben der Zwischenplatte kontinuierlich zu einer größeren Amplitude und umgekehrt verändert werden kann.

Eine weitere vorteilhafte Weiterbildung der Erfindung sieht vor, dass die Antriebswellen synchron angetrieben werden, wobei die Exzenter auf den Antriebswellen vorzugsweise derart angeordnet sind, dass zwischen den einzelnen Exzentern keine Phasenverschiebung gegeben ist. Eine derartige Maßnahme besitzt den Vorteil einer besonders stabilen, gleichförmigen Auf- und Abbewegung der Tretplatte.

Eine weitere vorteilhafte Weiterbildung der Erfindung sieht vor, dass die Exzenter auf den Antriebswellen derart angeordnet sind, dass zwischen mindestens einem Exzenter einer Antriebswelle und mindestens einem Exzenter einer anderen Antriebswelle eine Phasenverschiebung besteht, insbesondere dass zwischen dem einen ersten Eckbereich beaufschlagenden Exzenter und dem einen ihm schräg gegenüberliegenden zweiten Eckbereich beaufschlagenden weiteren Exzenter eine Phasenverschiebung von 180° besteht. Eine derartige Ausgestaltung ist insbesondere bei einer Verwendung der erfindungsgemäßen Vorrichtung als "Piaffe-Maschine" von Vorteil, da hierdurch dem Pferd in einfacher Art und Weise die Schrittbewegungen, die sie für ein Piaffe ausführen müssen, antrainiert werden kann.

Eine weitere vorteilhafte Weiterbildung der Erfindung sieht vor, dass mindestens zwei und vorzugsweise vier der vorgenannten Vorrichtungen zu einer Maschine zum Training und/oder zur Analyse des Bewegungsapparates eines Benutzers zusammengeschaltet werden. Im Falle eines vierbeinigen Benutzers ist es somit möglich, jedem einzelnen Bein eine eigene Vorrichtung zuzuordnen, die unabhängig von den anderen arbeitet. Durch diese Maßnahme ist eine individuelle Behandlung einer jeden Extremität des Benutzers beim Training und/oder der Analyse seines Bewegungsapparates möglich. Insbesondere eignet sich diese Ausgestaltung auch zu einem Einsatz als "Piaffe-Maschine", da dadurch insbesondere einem Pferd die vorgenannte Schrittfolge in einfacher Art und Weise gelehrt werden kann.

Weitere vorteilhafte Weiterbildungen der Erfindung sind Gegenstand der Unteransprüche.

Weitere Einzelheiten und Vorteile der Erfindung sind dem Ausführungsbeispiel zu entnehmen, das im folgenden anhand der Figuren beschrieben werden. Es zeigen:
- Figur 1: eine Vorderansicht eines Ausführungsbeispiels der Vorrichtung,
- Figur 2: eine Draufsicht auf das Ausführungsbeispiel, wobei die Tretplatte des Ausführungsbeispiels durchsichtig dargestellt ist,
- Figur 3: eine erste Seitenansicht des Ausführungsbeispiels,
- Figur 4: eine zweite Seitenansicht des Ausführungsbeispiels,
- Figur 5: eine Draufsicht auf ein zweites Ausführungsbeispiel,
- Figur 6: eine Seitenansicht des zweiten Ausführungsbeispiels, und
- Figur 7: ein Ausführungsbeispiel einer aus vier der beschriebenen Vorrichtungen zusammengesetzte Maschine.

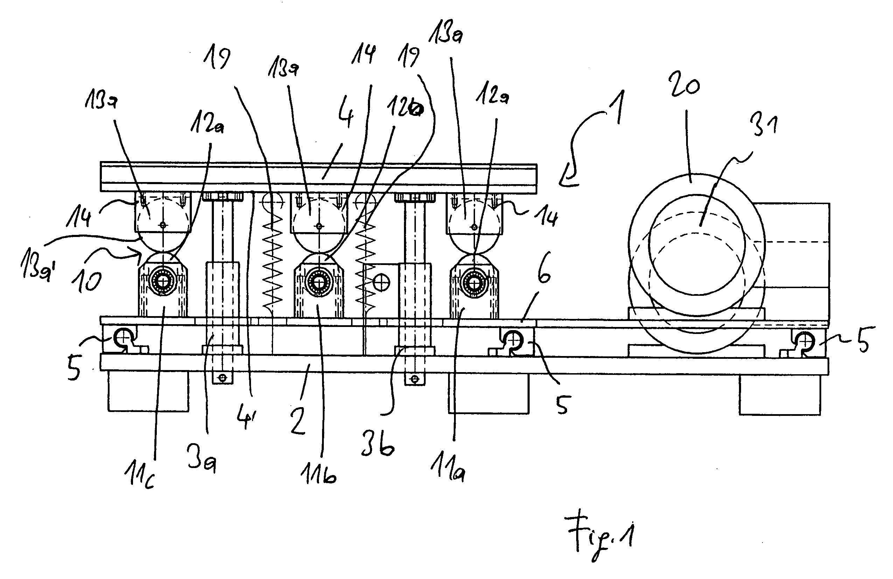

Die in den Figuren 1 bis 4 dargestellte, allgemein mit 1 bezeichnete Vorrichtung weist eine Grundplatte 2 auf, auf der - im hier gezeigten Ausführungsbeispiel - vier Vertikalführungen 3a-3d ortsfest angeordnet sind. Diese tragen eine Tretplatte 4, auf der der Benutzer der Vorrichtung 1, dessen Bewegungsapparat trainiert und/oder analysiert werden soll, steht. Im hier beschriebenen Ausführungsbeispiel soll der Einfachheit halber davon ausgegangen werden, dass auf der Tretplatte 4 ein Pferd mit seinen vier Beinen steht. Dies schränkt die Allgemeinheit der nachfolgenden Ausführungen nicht ein. Natürlich ist es auch möglich, die beschriebene Vorrichtung 1 bei anderen Tieren oder auch bei zweibeinigen Lebewesen zu verwenden. Die Anzahl wird Vertikalführungen 3a-3d dabei derart gewählt, dass durch sie eine sichere Lagerung der Tretplatte 4 gewährleistet ist, insbesondere, dass beim Betrieb der Vorrichtung 1 auch bei schwereren Benutzern kein unerwünschter Kippeffekt auftritt.

Zwischen der Grundplatte 2 und der Tretplatte 4 ist eine entlang einer Führung 5 verschiebbare Zwischenplatte 6 angeordnet, welche die allgemein mit 10 bezeichnete Antriebseinrichtung trägt, durch die in der nachstehend beschriebenen Art und Weise eine von den Vertikalführungen 3a-3d geführte Hubbewegung der Tretplatte 4 erzeugt werden kann. Hierzu weist die Antriebseinrichtung 10 eine entsprechende Anzahl von Antriebswellen 11a-11c auf, auf denen jeweils eine entsprechende Anzahl von Exzentern 12a-12c angeordnet sind. Im hier gezeigten Ausführungsbeispiel wird von drei Antriebswellen 11a-11c, die jeweils drei Exzentern 12a-12c aufweisen, ausgegangen. Dem Fachmann ist klar ersichtlich, dass diese Auswahl nur einen exemplarischen Charakter besitzt: Grundsätzlich ist es ausreichend, dass eine einzige Antriebswelle - z. B. die Antriebswelle 11b - mit einem einzigen Exzenter - z. B. mit dem Exzenter 12b - vorgesehen ist, da bereits eine derartige Ausgestaltung zur Erzeugung einer Hubbewegung der Tretplatte 4 ausreicht. Erforderlichenfalls müssen bei einer derartigen Ausgestaltung dann seitliche Führungen für die Tretplatte 4 vorgesehen werden. Der beschriebene Fall von drei Antriebswellen 11a-11c mit jeweils drei Exzentern 12a-12c besitzt den Vorteil, dass hierdurch eine Beaufschlagung der Tretplatte 4 mit der von der Antriebseinrichtung 10 erzeugten Hubbewegung jeweils in den Eckbereichen sowie im Mittelbereich gegeben ist, so dass eine stabile Auf-und Abbewegung der Tretplatte 4 gewährleistet ist.

Wie aus der Figur 1 ersichtlich ist, ist über jedem Exzenter 12a-12c der Antriebswellen 11a-11c eine Rolle 13a-13c angeordnet, die über eine entsprechende Halterung 14 mit der Unterseite 4' der Tretplatte 4 verbunden ist. Die Achsen 14a-14c der Rollen 13a-13c sind dabei kollinear zu der jeweiligen Antriebswelle 11 a-11 c angeordnet, so dass die Laufflächen 13a'-13c' der Rollen 13a-13c auf den Oberflächen 12a'-12c' der Exzenter 12a-12c abrollen können.

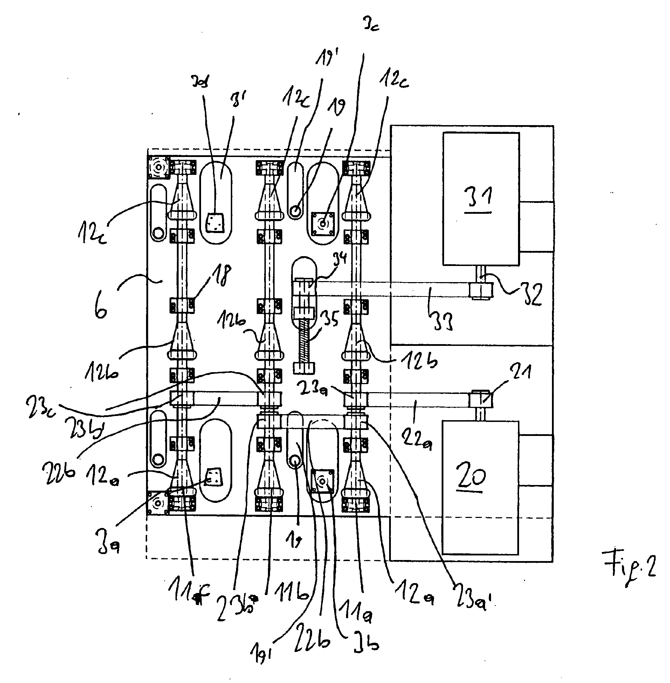

Wie am besten aus Figur 2 ersichtlich ist, werden die in Lagerelementen 18 gelagerten Antriebswellen 11 a-11 c von einem Motor 20 angetrieben, wobei im hier gezeigten Fall eine Antriebsspindel 21 des Motors 20 über einen Zahnriemen 22a mit einem Zahnrad 23a der ersten Antriebswelle 11 a verbunde ist. Diese trägt ein zweites Zahnrad 23a', welches über einen Zahnriemen 22b mit einem ersten Zahnrad 23b verbunden ist. Ein zweites Zahnrad 23b' der zweiten Antriebswelle 11 b ist über einen weiteren Zahnriemen 22c mit einem Zahnrad 23c' der dritten Antriebswelle 11 c verbunden. Die beschriebene Ausgestaltung bewirkt, dass alle drei Antriebswellen 11 a-11c synchron angetrieben werden. In Verbindung mit der aus den Figuren ersichtlichen phasengleichen Ausrichtung der Exzenter 12a-12c der Antriebswellen 11 a-11 c bewirkt dies eine stabile Auf- und Abbewegung der Tretplatte 4 ohne eine Kippbewegung derselben.

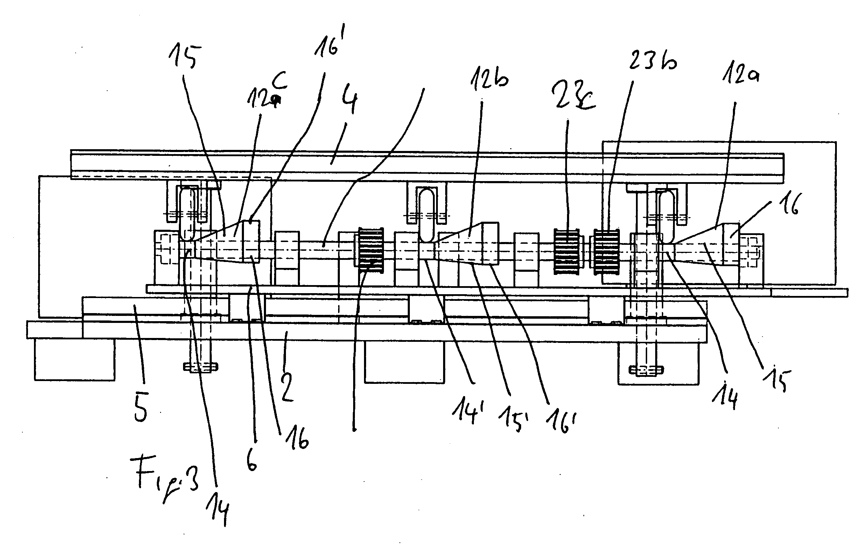

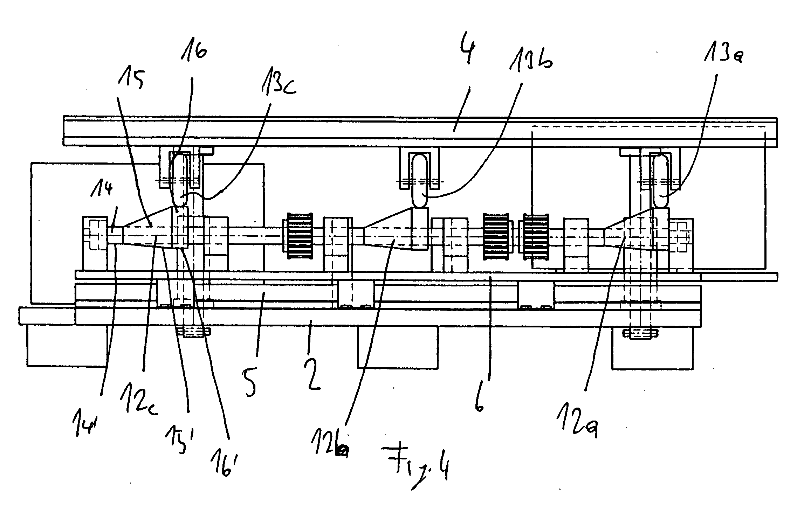

Wie am besten aus den Figuren 3 und 4 ersichtlich ist, weisen die Exzenter 12a-12c einen nicht-exzentrischen Bereich 14, an den sich ein exzentrischer Bereich 15 anschließt, und einen weiteren exzentrischen Bereich 16 auf. Rollt nun eine Rolle 13a-13c auf diesen Bereich 14 des Exzenters 12a-12c ab, so bewegt sie sich auf einer zur Antriebswelle 11 a-11 c konzentrischen Laufbahn. Dies hat zur Folge, dass auch bei einer rotierenden Antriebswelle 11a-11c kein Hub erzeugt wird, dass also die Tretplatte 4 trotz der sich in Betrieb befindlichen Antriebseinrichtung 10 keine Auf-und Abbwegung durchführt. Eine derartige Ausgestaltung des Anfangsbereichs 14 des Exzenters 12a-12c ist insbesondere bei einer Verwendung der Vorrichtung 1 bei Fluchttieren von Vorteil, die hierdurch in dieser Startphase des Trainings und/oder Analyse an die Vorrichtung 1 gewöhnt werden können.

An diesen Bereich 14 schließt sich der mittlere Bereich 15 an, in dem - wie aus den Figuren 3 und 4 ersichtlich ist - der von einer Rolle 13a-13c während einer Umdrehung der Antriebsachse 11a-11c zurückgelegte Weg in axialer Richtung des Exzenters 12a-12c stetig zunimmt. Der von dem Exzenter 12a-12c bewirkte Hub ist also am Ende des mittleren Bereichs 14 deutlich größer als an dessen dem ersten Bereich 14 zugewandten vorderen Bereich. Wird nun - wie nachstehend beschrieben - die Zwischenplatte 6 entsprechend verschoben, kann durch diese Verschiebung der Hub, welcher von der Antriebseinrichtung 10 auf der Tretplatte 4 ausgeübt wird, verstellt werden.

An den mittleren Bereich 15 schließt sich dann der Bereich 16 an, der zwar wiederum exzentrisch ausgeführt ist, aber zu keinem weiteren Anstieg der Hubamplitude führt. Das Vorsehen dieses Bereichs 16 zur Erzeugung der Maximalamplitude besitzt den Vorteil, dass hierdurch die Rollen 13a-13c mit einer großen Auflagefläche auf den Außenflächen 16' des Exzenters 12a-12c abrollen und somit auch dann, wenn die Vorrichtung 1 die maximalmögliche Amplitude erzeugt, ein ruhiger Betrieb der Vorrichtung 1 ermöglicht wird, was wiederum insbesondere bei zu Fluchtreaktionen neigenden Tieren von Vorteil ist.

Um nun die Zwischenplatte 6 entlang der Führung 5 zur Verstellung des Hubs der Tretplatte 4 verschieben zu können, weist die Vorrichtung 1 eine Hubverstelleinrichtung auf, durch die der Hub der Tretplatte 4 veränderlich ist, indem die Position zwischen den Rollen 13a-13c und den mit ihnen zusammenwirkenden Exzentern 12a-12c verändert wird. Hierzu dient beim beschriebenen Ausführungsbeispiel eine Linearverstelleinheit 30 auf (siehe Figur 2), mittels derer die Zwischenplatte 6 und somit die auf ihr angeordneten Exzenter 12a-12c relativ zu der Tretplatte 4 und somit zu den an ihrer Unterseite 4' angeordneten Rollen 13a-13c verschoben werden können. Die Linearverstelleinheit 30 der Vorrichtung 1 besitzt einen vorzugsweise auf der Grundplatte 2 angeordneten Motor 31 auf, dessen Antriebsspindel 32 über einen Zahnriemen 33 mit einem Zahnrad 34 eines Spindelantriebs 35 verbunden ist, welcher seinerseits an der Zwischenplatte 6 angeordnet ist. Die Rotation des Zahnrads 34 bewirkt eine Linearverschiebung des Spindelantriebs 35, so dass die Zwischenplatte 6 zwischen der in Figur 3 gezeigten Minimalposition, in der der von der Antriebseinrichtung 10 erzeugte Hub der Tretplatte 4 minimal ist, zu der in Figur 4 gezeigten Maximalposition, bei der ein maximaler Hub der Tretplatte 4 erzeugt wird bewegbar ist.

Die Funktionsweise der Vorrichtung 1 ist nun wie folgt:
Um das auf der Tretplatte 4 stehende Pferd oder einen sonstiger Benutzer nicht von Anfang an einer Bewegung der Tretplatte 4 mit einer großen Hubamplitude auszusetzen, wird bevorzugt, dass zu Beginn des Trainings- oder Analysevorgangs die Zwischenplatte 6 in ihrer in Figur 3 gezeigten Position angeordnet ist, in der - wie sich aus der Stellung der Rollen 13a-13c zu den Exzentern 12a-12c ergibt - durch die Abrollbewegung der Rollen 13a-13c auf den Oberflächen 14' der Bereiche 14 der Exzenter 12a-12c keine Hubamplitude erzeugt wird. Um nun den Hub der Tretplatte 4 kontinuierlich erhöhen zu können, wird die Zwischenplatte 6 durch eine entsprechende Antriebsbewegung der Linearverstelleinheit 30 in Figur 3 nach links bewegt, was bewirkt, dass die durch die Exzenter 12a-12c bewirkte Hubamplitude der Tretplatte 4 vergrößert wird. In vorteilhafter Art und Weise ist somit durch eine einfache Verschiebung der Zwischenplatte 6 eine kontinuierliche Hubverstellung während des Betriebs der Vorrichtung 1 möglich.

Um den maximalen Hub zu erreichen, wird die Zwischenplatte 6 durch die Linearverstelleinheit 30 ganz nach links gefahren, bis sie schließlich in ihre in Figur 4 gezeigte Endstellung gelangt, in der der Hub der Tretplatte 4 maximal ist. Um zu erreichen, dass in dieser Maximalstellung der Vorrichtung 1 ein möglichst großer Kontakt zwischen den Laufflächen der Rollen 13a-13c und den sie nun tragenden Oberflächen 16' der Exzenter 12a-12c gegeben ist, sind die Exzenter 12a-12c in diesem Bereich 16 mit einer parallel zur Antriebsachse verlaufenden Oberfläche ausgestattet.

Aus den Figuren 1 und 2 ist ersichtlich, dass der Motor 20 auf der Zwischenplatte 6 angeordnet ist. Dies besitzt den Vorteil, dass in die Relativposition zwischen dem Motor 20 und den Antriebswellen 11 a-11 c auch während einer Verschiebung der Zwischenplatte 6 unverändert bleibt, so dass die Kraftübertragung zwischen dem Motor 20 und Antriebswellen 11 a-11 c wie vorstehend beschrieben über den Zahnriemen 22a erfolgen kann. Selbstverständlich ist es nicht zwingend, dass der Antrieb der Antriebswellen 11a-11c wie vorstehend beschrieben erfolgt. Es ist z. B. auch möglich, dass jede Antriebswelle 11 a-11 c über einen eigenen Motor verfügt.

Wie aus den Figuren ersichtlich ist, ist wie im hier beschriebenen Ausführungsbeispiel vorgesehen, dass sämtliche Exzenter 12a-12c der Antriebswellen 11 a-11 c die gleiche Phasenlage aufweisen. Dies bewirkt, dass eine gleichmäßige Auf- bzw. Abbewegung der Tretplatte 4 in ihrem gesamten Bereich gegeben ist.

Vorzugsweise ist noch vorgesehen, dass die Vorrichtung 1 Rückholfedern 19 aufweist, durch die eine Rückstellbewegung der Tretplatte 4 erleichtert wird. Die Rückholfedern 19 treten hierbei durch Ausnehmungen 19' der Zwischenplatte 6 hindurch und verbinden derart die Grundplatte 2 mit der Tretplatte 4. Langlöcher 3' in der Zwischenplatte 6 sorgen dafür, dass die Vertikalführungen 3a-3d, welche die Tretplatte 4 auf der Grundplatte 2 vertikalbeweglich lagern, eine Verschiebung der Zwischenplatte 6 nicht behindern.

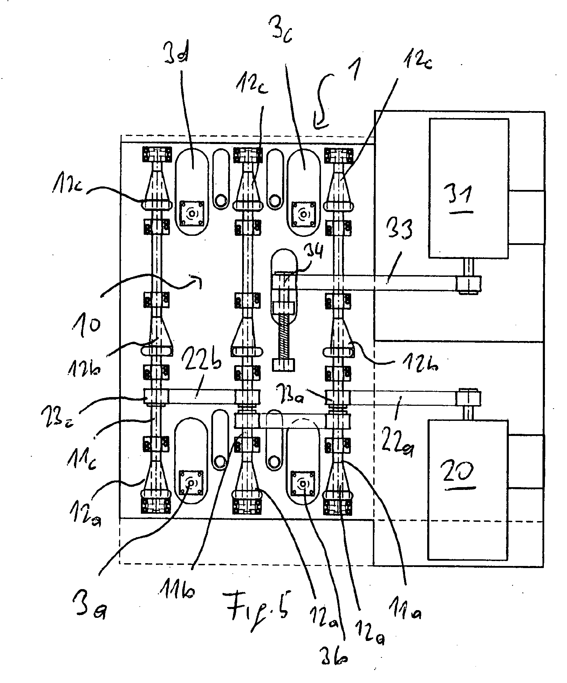

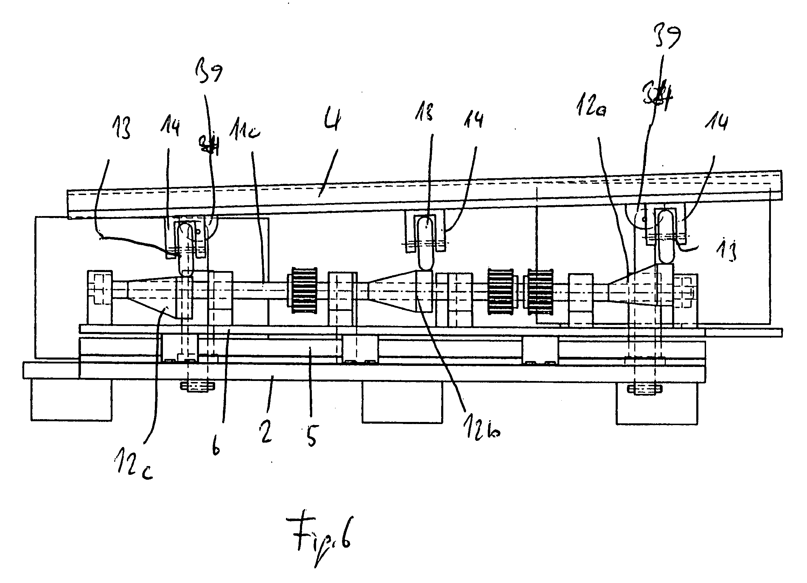

In den Figuren 5 und 6 ist nun ein zweites Ausführungsbeispiel der Vorrichtung 1 dargestellt, wobei einander entsprechende Bauteile mit den gleichen Bezugszeichen versehen und nicht mehr näher beschrieben werden. Der wesentliche Unterschied zwischen dem ersten und zweiten Ausführungsbeispiel besteht darin, dass eine Phasenlage zwischen den einzelnen Exzentern 12a-12c der Antriebswellen 11 a-11 c vorgesehen ist. Hierdurch wird zusätzlich zur Hubamplitude noch eine Kippbewegung der Tretplatte 4 erreicht.

Weisen z. B. - wie in den Figuren 5 und 6 dargestellt - der erste Exzenter 12a der ersten Antriebswelle 11 a und der dritte Exzenter 12c der dritten Antriebswelle 11 c sowie der erste Exzenter 12a der dritten Antriebswelle 11 c und der dritte Exzenter 12c der ersten Antriebswelle 11a eine Phasenverschiebung von 180° auf, so bewirkt dies, dass die Tretplatte 4 - in der Orientierung der Figur 5 gesehen - zu dem in den Figuren 5 und 6 dargestellten Zeitpunkt links vorne den kleinsten Hub und gleichzeitig links hinten den größten Hub aufweist, während der Hub rechts vorne und rechts hinten maximal bzw. minimal ist. Wie aus der Figur 6 ersichtlich ist, befindet sich zu diesem Zeitpunkt der Exzenter 12a der Antriebswelle 11 c in der Position, in der er den größten Hub erzeugt. Der um 180° phasenverschoben angeordnete Exzenter 12c der Antriebswelle 11c befindet sich in seiner Position, in der er den minimalen Hub erzeugt und der zwischen den beiden Exzentern 12a, 12c liegende mittlere Exzenter 12b, der eine Phasenverschiebung jeweils um 90° gegenüber den beiden Exzentern 12a, 12c aufweist, erzeugt einen mittleren Hub. Gleichzeitig befindet sich der Exzenter 12c der Antriebswelle 11a in einer Position, in der er den minimalen Hub erzeugt, und der Exzenter 12a der Antriebswelle 11a erzeugt den maximalen Hub. Die Exzenter 12a-12c der beiden Antriebswellen 11a und 11 c sind also jeweils um 180° gegeneinander phasenverschoben angeordnet. Nach einer Halbdrehung der Exzenter 12a-12c ist daher die Hubamplitude im Bereich links vorne maximal und links hinten minimal. Die Bewegung der Tretplatte 4 entspricht somit der Bewegungsabfolge eines Pferdes, das eine Piaffe durchführt. Die Vorrichtung 1 ist somit in vorteilhafter Art und Weise auch dazu geeignet, einem Pferd oder einem anderen Tier eine gewisse Schrittfolge zu lehren.

Damit die Tretplatte 4 der erzeugten Hubbewegung der Antriebseinrichtung 10 folgen kann, ist - wie am besten aus der Figur 5 ersichtlich ist - vorgesehen, dass die Verbindung zwischen den Vertikalführungen 3a-3d und die Unterseite 4' der Tretplatte 4 durch eine Gelenkverbindung 39 ausgebildet ist.

Wie aus obiger Beschreibung ersichtlich, bedarf es, um die beschriebene Bewegung der Tretplatte 4 hervorrufen zu können, des mittleren Exzenters 12b der Exzenterwellen 12a, 12c nicht. Die Verwendung von drei Exzentern 12a-12c an jeder Antriebswelle 11a-11c besitzt den Vorteil, dass hierdurch die Tretplatte 4 auch in der Mitte abgestützt ist.

Bei einer derartig ausgebildeten Vorrichtung ist es am einfachsten, nur zwei Antriebswellen 11a, 11 c mit jeweils zwei oder drei Exzentern 12a-12c zu verwenden. Wenn aus Gründen eine bessere Unterstützung des Mittelbereichs der Tretplatte 4 eine weitere Antriebswelle, hier die Antriebswelle 11b, mit ihren Exzentern 12a-12c eingesetzt werden soll, kann es erforderlich sein, dass eine Hubanpassung dieser Exzenter 12a-12c erforderlich ist. Dann ist vorgesehen, dass die Antriebswelle 11 b' durch eine nicht gezeigte Einrichtung relativ zur Zwischenplatte 6 und somit zu den anderen beiden Antriebswellen 11 a, 11 c verschiebbar ist. Eine derartige Verschiebbarkeit der Antriebswellen 11a-11c kann auch optional für die beiden anderen Antriebswellen vorgesehen sein.

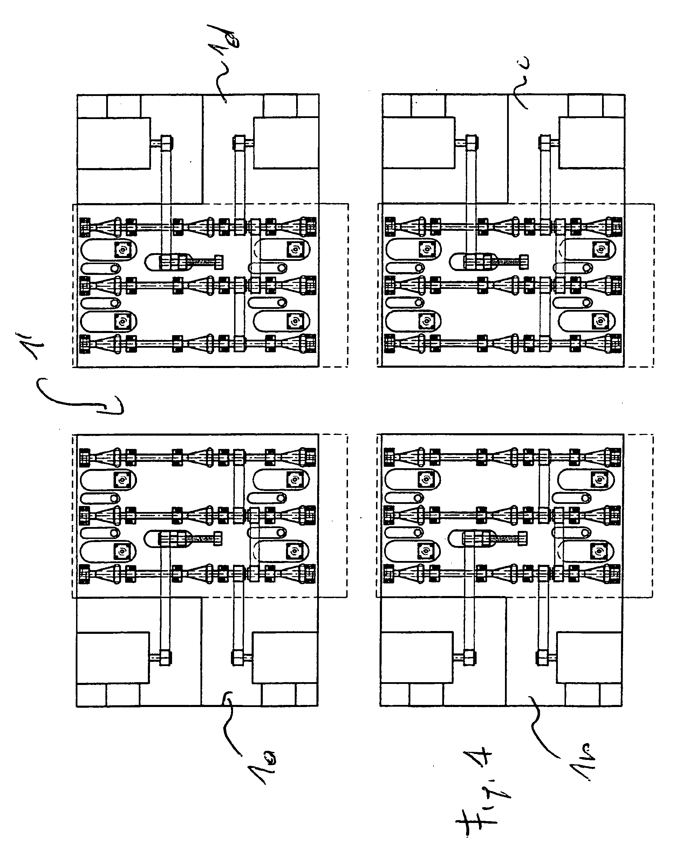

In der Figur 7 ist nun eine aus vier der Vorrichtung 1 zusammengesetzte Maschine 1' dargestellt, die mehrere Vorrichtung 1, wie sie vorstehend beschrieben sind, aufweist. Eine derartige Maschine 1' eignet sich insbesondere für einen Einsatz bei vierbeinigen Benutzern, da hierdurch jede Vorrichtung 1 der Maschine 1' individuell auf das zu trainierende und/oder zu analysierende Bein des Benutzers abgestimmt werden kann. Eine Einsatzmöglichkeit der beschriebenen Maschine 1' kann wiederum daran bestehen, einem Pferd die Schrittfolge zu lehren, welches es bei einer Piaffe durchzuführen hat. Dann ist vorgesehen, dass sich die das linke vordere Bein beaufschlagende Vorrichtung 1 a und das dazu hintere rechte Bein beaufschlagende Vorrichtung 1 c phasengleich bewegen, so dass die beiden Vorrichtungen 1 a und 1 c zum gleichen Zeitpunkt jeweils ihre minimale bzw. ihre maximale Amplitude erzeugt. Die das linke hintere Bein beaufschlagende Vorrichtung 1b und die das rechte vordere Bein beaufschlagende Vorrichtung 1 d arbeiten hierzu um 180° phasenversetzt.

Dem Fachmann ist aus obiger Beschreibung klar ersichtlich, dass die Zwischenplatte 6 lediglich dazu dient, den Hub der Tretplatte 4 während des Trainings/Behandlungsvorganges verstellen zu können. Ist dieser vorteilhafte Effekt nicht erwünscht oder erforderlich, so ist es für den Fachmann selbstverständlich, dass er hier auf eine relativ zu der Tretplatte 4 verschiebliche Zwischenplatte 6 verzichten kann und somit die Antriebseinrichtung 10 auf der Grundplatte 2 anordnen kann. Es ist aber auch möglich, dass die Zwischenplatte 6 zwar erhalten bleibt, aber unverschieblich ausgeführt ist.

In der vorstehenden Beschreibung der Vorrichtungen 1 wird davon ausgegangen, dass die Antriebswellen 11a-11c von einem Motor 20 angetrieben werden. Es ist natürlich auch möglich, dass für jede Antriebswelle 11a-11c ein separater Motor vorgesehen ist.

Zusammenfassend ist festzuhalten, dass die beschriebene Vorrichtung 1 in besonders einfacher Art und Weise ein Training, auch im Sinne eines Eintrainierens eines Bewegungsablaufes und/oder einer Rekonvaleszenz-Behandlung, als auch eine Analyse des Bewegungsapparates des Benutzers ermöglicht, wobei die Vorrichtung 1 sich aufgrund ihrer mechanischen Ausgestaltung insbesondere für schwere Benutzer wie Pferde, Kamele, etc. eignet.

## Patentansprüche

1. Vorrichtung für ein Training und/oder eine Analyse des Bewegungsapparates eines Benutzers, wobei die Vorrichtung eine auf einer Grundplatte (2) gelagerte Tretplatte (4) aufweist, die durch eine Antriebseinrichtung (10) in periodische und/oder aperiodische Bewegung versetzbar ist, dass die Antriebseinrichtung (10) mindestens eine Antriebswelle (11a-11c) aufweist, auf der mindestens ein Exzenter (12a-12c) angeordnet ist, und dass an der Unterseite (4') der Tretplatte (4) mindestens eine Rolle (13a-13c) angeordnet ist, die auf einer Außenfläche (14', 15', 16') des mindestens einen Exzenters (12a-12c) abrollbar ist, **dadurch gekennzeichnet, dass** die Tretplatte (4) der Vorrichtung (1) über ortsfest an der Grundplatte (2) angeordnete Vertikalführungen (3a-3d) mit dieser (2) verbunden ist, so dass die derart gelagerte Tretplatte (4) einer durch die Antriebseinrichtung (10) bewirkten Hubbewegung folgen kann, dass mindestens ein Exzenter (12a-12c) einen ersten exzentrischen Bereich (15) aufweist, der kegelstumpfförmig ausgebildet ist, so dass der von der auf der Oberfläche (15') dieses Bereichs (15) ablaufenden Rolle (13a-13c) zurückgelegte Weg entlang der axialen Erstreckung des Exzenters (12a-12c) zunimmt, und dass die Vorrichtung (1) eine Hubverstelleinrichtung (6, 30) aufweist, durch welche der Hub der Tretplatte (4) durch eine Positionsveränderung zwischen mindestens einer Rolle (13a-13c) und dem mit ihr zusammenwirkenden Exzenter (12a-12c) veränderbar ist.

2. Vorrichtung nach Anspruch 1, **dadurch gekennzeichnet, dass** sich diesem exzentrischem Bereich (15) des Exzenters (12a-12c) ein nicht-exzentrischer Bereich (14) anschließt.

3. Vorrichtung nach einem der vorangehenden Ansprüche, **dadurch gekennzeichnet, dass** sich an den erstgenannten exzentrischen Bereich (15) ein weiterer exzentrischer Bereich (16) anschließt, dessen Außenfläche (16') konzentrisch zur Antriebswelle (11a-11c) ausgebildet ist.

4. Vorrichtung nach einem der vorgenannten Ansprüche, **dadurch gekennzeichnet, dass** die Vorrichtung (1) mindestens zwei Antriebswellen (11 a-11 c) mit jeweils mindestens zwei Exzentern (12a-12c) aufweist, und dass an der Unterseite (4') der Tretplatte (4) mindestens vier jeweils mit einem Exzenter (12a-12c) zusammenwirkende Rollen (13a-13c) angeordnet sind.

5. Vorrichtung nach einem der vorgenannten Ansprüche, **dadurch gekennzeichnet, dass** die Vorrichtung drei Antriebswellen (11a-11c) mit jeweils mindestens drei Exzentern (12a-12c) aufweist, und dass an der Unterseite (4') der Tretplatte (4) mindestens sechs Rollen (13a-13c) vorgesehen sind.

6. Vorrichtung nach einem der vorangehenden Ansprüche, **dadurch gekennzeichnet, dass** die Hubverstelleinrichtung eine Linearverstelleinheit (30) aufweist, und dass mindestens ein Exzenter (12a-12c) durch die Linearverstelleinheit (30) relativ zu der mit ihm zusammenwirkenden Rolle (13a-13c) positionsveränderlich ist.

7. Vorrichtung nach einem der vorangehenden Ansprüche, **dadurch gekennzeichnet, dass** die Vorrichtung (1) eine zwischen der Grundplatte (2) und der Tretplatte (4) angeordnete Zwischenplatte (6) aufweist, auf der mindestens eine Antriebswelle (11a-11c) angeordnet ist, und dass die Zwischenplatte (6) durch die Linearverstelleinheit (30) relativ zur Tretplatte (4) verschiebbar ist.

8. Vorrichtung nach einem der vorangehenden Ansprüche, **dadurch gekennzeichnet, dass** die Exzenter (12a-12c) mindestens einer Antriebswelle (11a-11c) die gleiche Phasenlage besitzen.

9. Vorrichtung nach einem der vorangehenden Ansprüche, **dadurch gekennzeichnet, dass** mindestens ein Exzenter (12a-12c) einer Antriebswelle (11a-11c) und mindestens ein Exzenter (12a-12c) einer anderen Antriebswelle (11a-11c) der Antriebseinrichtung (10) eine unterschiedliche Phasenlage aufweise.

10. Vorrichtung nach einem der vorangehenden Ansprüche, **dadurch gekennzeichnet, dass** mindestens eine Antriebswelle (11a-11c) relativ zu der sie tragenden Zwischenplatte (6) verschieblich ist.

11. Vorrichtung nach einem der vorangehenden Ansprüche, **dadurch gekennzeichnet, dass** die Tretplatte (4) mit den Vertikalführungen (3a-3d) über Gelenkverbindungen (39) verbunden ist.

12. Vorrichtung nach einem der vorangehenden Ansprüche, **dadurch gekennzeichnet, dass** die Grundplatte (2) und die Tretplatte (4) durch mindestens eine Rückholfeder (19) verbunden sind.

13. Maschine zum Training und/oder zur Analyse des Bewegungsapparates eines Benutzers, **dadurch gekennzeichnet, dass** die Maschine (1') mindestens zwei zusammenwirkende Vorrichtung (1 a-1 d) nach einem der vorangehenden Ansprüche aufweist.

## Claims

1. Device for training and/or analyzing the musculoskeletal system of a user, wherein the device comprises a stepping plate (4) which is mounted on a base plate (2) and can be made to periodically and/or aperiodically move by means of a driving mechanism (10), wherein the driving mechanism (10) comprises at least one drive shaft (11a-11c) on which at least one cam (12a-12c) is disposed, and wherein at least one roll (13a-13c) arranged to roll on an outer surface (14', 15', 16') of the at least one cam (12a-12c) is disposed on the bottom surface (4') of the stepping plate (4), **characterized in that** the stepping plate (4) of the device (1) is connected to the base plate (2) by means of vertical guides (3a-3d) that are stationarily disposed on the base plate (2) so that the stepping plate (4), supported in this way, can follow a vertical movement effected by the driving mechanism (10), that at least one cam (12a-12c) has a first eccentric zone (15) of truncated design so that the distance traveled by the roll (13a-13c), rolling on the surface (15') of the said zone (15), increases along the axial extension of the cam (12a-12c), and that the device (1) comprises a vertical adjusting mechanism (6, 30) which allows the lift of the stepping plate (4) to be modified by changing the position between at least one roll (13a-13c) and the cam (12a-12c) that cooperates with it.

2. The device as defined in Claim 1, **characterized in that** the eccentric zone (15) of the cam (12a-12c) is followed by a non-eccentric zone (14).

3. The device as defined in any of the preceding claims, **characterized in that** the first-mentioned eccentric zone (15) is followed by another eccentric zone (16) which has an outer surface (16') concentric to the drive shaft (11a-11c).

4. The device as defined in any of the preceding claims, **characterized in that** the device (1) has at least two drive shafts (11a-11c), each with at least two cams (12a-12c), and that at least four rolls (13a-13c), each cooperating with at least one cam (12a-12c), are arranged on the bottom surface (4') of the stepping plate (4).

5. The device as defined in any of the preceding claims, **characterized in that** the device comprises three drive shafts (11a-11c) with at least three cams (12a-12c) each and that at least six rolls (13a-13c) are disposed on the bottom (4') of the stepping plate (4).

6. The device as defined in any of the preceding claims, **characterized in that** the adjusting device for the vertical movement comprises a linear adjusting unit (30) and that the position of at least one cam (12a-12c) relative to the cooperating roll (13a-13c) can be varied by the linear adjusting unit (30).

7. The device as defined in any of the preceding claims, **characterized in that** the device (1) comprises an intermediate plate (6) disposed between the base plate (2) and the stepping plate (4), with at least one drive shaft (11a-11c) arranged on it, and that the intermediate plate (6) can be displaced by the linear adjusting unit (30) relative to the stepping plate (6).

8. The device as defined in any of the preceding claims, **characterized in that** the cams (12a-12c) of at least one drive shaft (11a-11c) have the same phase position,

9. The device as defined in any of the preceding claims, **characterized in that** the at least one cam (12a-12c) of one drive shaft (11a-11c) and at least one cam (12a-12c) of another drive shaft (11a-11c) of the driving mechanism (10) have different phase positions.

10. The device as defined in any of the preceding claims, **characterized in that** at least one drive shaft (11a-11c) can be displaced relative to the intermediate plate (6) on which it is carried.

11. The device as defined in any of the preceding claims, **characterized in that** the stepping plate (4) is connected with the vertical guides (3a-3d) via articulated connections (29).

12. The device as defined in any of the preceding claims, **characterized in that** the base plate (2) and the stepping plate (4) are connected via at least one restoring spring (19).

13. Machine for training and/or for analyzing the musculoskeletal system of a user, **characterized in that** the machine (1') comprises at least two cooperating devices (1a-1d) as defined in any of the preceding claims.

## Revendications

1. Dispositif permettant d'exercer et/ou d'analyser l'appareil locomoteur d'un utilisateur, ledit dispositif comportant un plateau de contact (4) monté sur une plaque de base (2) et pouvant être mis en mouvement périodique et/ou apériodique par un dispositif d'entraînement (10), ledit dispositif d'entrainement (10) comportant au moins un arbre d'entraînement (11a-11c) sur lequel est disposé au moins un excentrique (12a-12c), et au moins un rouleau (13a-13c) étant disposé contre la face inférieure (4') du plateau de contact (4) et pouvant rouler sur une surface extérieure (14', 15', 16') du ou des excentriques (12a-12c), **caractérisé en ce que** le plateau de contact (4) du dispositif (1) est solidarisé avec la plaque de base (2) par des glissières verticales (3a-3d) disposées fixement sur ladite plaque de base (2), de telle manière que le plateau de contact (4) ainsi monté puisse suivre un mouvement de levage déclenché par le dispositif d'entraînement (10), **en ce que** le ou les excentriques (12a-12c) présentent une première zone excentrique (15) prévue avec une forme tronconique, de telle manière que la course accomplie par le rouleau (13a-13c) roulant à la surface (15') de cette zone (15) s'accroisse le long de l'extension axiale de l'excentrique (12a-12c), et **en ce que** le dispositif (1) comporte un dispositif de réglage de course (6, 30) permettant de modifier la course du plateau de contact (4) par changement de position entre au moins un rouleau (13a-13c) et l'excentrique (12a-12c) qui coopère avec celui-ci.

2. Dispositif selon la revendication 1, **caractérisé en ce qu'**une zone non excentrique (14) est adjacente à ladite zone excentrique (15) de l'excentrique (12a-12c).

3. Dispositif selon l'une des revendications précédentes, **caractérisé en ce qu'**une autre zone excentrique (16) est adjacente à la première zone excentrique (15) mentionnée, dont la surface extérieure (16') est prévue concentrique à l'arbre d'entraînement (11a-11c).

4. Dispositif selon l'une des revendications précédentes, **caractérisé en ce que** ledit dispositif (1) comporte au moins deux arbres d'entraînement (11a-11c) avec au moins deux excentriques (12a-12c) chacun, et **en ce qu'**au moins quatre rouleaux (13a-13c) coopérant chacun avec un excentrique (12a-12c) sont disposés contre la face inférieure (4') du plateau de contact (4).

5. Dispositif selon l'une des revendications précédentes, **caractérisé en ce que** ledit dispositif comporte trois arbres d'entraînement (11a-11c) avec au moins trois excentriques (12a-12c) chacun, et **en ce qu'**au moins six rouleaux (13a-13c) sont prévus contre la face inférieure (4') du plateau de contact (4).

6. Dispositif selon l'une des revendications précédentes, **caractérisé en ce que** le dispositif de réglage de course comporte une unité de réglage linéaire (30) et **en ce que** la position d'au moins un excentrique (12a-12c) peut être modifiée par rapport au rouleau (13a-13c) coopérant avec lui par l'unité de réglage linéaire (30).

7. Dispositif selon l'une des revendications précédentes, **caractérisé en ce que** ledit dispositif (1) comporte une plaque intercalaire (6) disposée entre la plaque de base (2) et le plateau de contact (4), sur laquelle au moins un arbre d'entraînement (11a-11c) est disposé, et **en ce que** la plaque intercalaire (6) est déplaçable par rapport au plateau de contact (4) au moyen de l'unité de réglage linéaire (30),

8. Dispositif selon l'une des revendications précédentes, **caractérisé en ce que** les excentriques (12a-12c) d'au moins un arbre d'entraînement (11a-11c) présentent la même position de phase.

9. Dispositif selon l'une des revendications précédentes, **caractérisé en ce qu'**au moins un excentrique (12a-12c) d'un arbre d'entraînement (11a-11c) et au moins un excentrique (12a-12c) d'un autre arbre d'entraînement (11a-11c) du dispositif d'entraînement (10) présentent des positions de phase différentes.

10. Dispositif selon l'une des revendications précédentes, **caractérisé en ce qu'**au moins un arbre d'entraînement (11a-11c) est déplaçable par rapport à la plaque intercalaire (6) qui le supporte.

11. Dispositif selon l'une des revendications précédentes, **caractérisé en ce que** le plateau de contact (4) est raccordé par des liaisons articulées (39) aux glissières verticales (3a-3d).

12. Dispositif selon l'une des revendications précédentes, **caractérisé en ce que** la plaque de base (2) et le plateau de contact (4) sont reliés par au moins un ressort de rappel (19).

13. Machine permettant d'exercer et/ou d'analyser l'appareil locomoteur d'un utilisateur, **caractérisée en ce que** ladite machine (1') comporte au moins deux dispositifs (1a-1d) selon l'une des revendications précédentes, coopérant entre eux.
